# EUROPÄISCHE PATENTSCHRIFT

(11) **EP 1 013 486 B1**
(45) Veröffentlichungstag und Bekanntmachung des Hinweises auf die Patenterteilung: **09.04.2003**
(21) Anmeldenummer: 99122542.6
(22) Anmeldetag: 12.11.1999
(51) Int. Cl.: B60H 1/00

(54) **Heiz- und/oder Klimaanlage für Kraftfahrzeuge**
Heating and/or air conditioning for vehicles
Chauffage et/ou conditionnement d'air pour vehicules

(30) Priorität: 16.12.1998 DE 19858028
(43) Veröffentlichungstag der Anmeldung: 28.06.2000
(73) Patentinhaber: Bayerische Motoren Werke Aktiengesellschaft, 80809 München (DE)
(72) Erfinder: Schicktanz Norbert, 80995 München (DE); Schemmerer, Martin, 84034 Landshut (DE); Neubert, Bernhard, 48317 Drensteinfurt (DE); Thoma, Peter, Dr., 85716 Unterschleissheim (DE); Rathgeber, Gerhard, 80939 München (DE)

(56) Entgegenhaltungen:
- EP-A- 0 210 548
- DE-A- 4 327 265
- DE-C- 19 701 499
- US-A- 4 289 195
- US-A- 5 521 478
- US-A- 5 767 651

## Beschreibung

Die Erfindung bezieht sich auf eine Vorrichtung der im Oberbegriff des ersten Anspruchs angegebenen Art.

Bei heutigen Kraftfahrzeugen sind Luftausströmer für den Innenraum des Fahrzeugs in drei Bereichen angeordnet, nämlich einmal zur Frontscheibe, dann im Armaturenbrett zum Kopfbereich der Fahrzeuginsassen und zum Dritten zum Fußbereich zumindest der Frontpassagiere.

Aus der US-A 4,289,195 ist eine Heiz- und/oder Klimaanlage für Kraftfahrzeuge bekannt, bei welcher die Luftverteilung zu den einzelnen Luftausströmern im Fahrzeuginnenraum vollautomatisch über eine Steuereinrichtung erfolgt. Hierzu sind an den verschiedenen Luftabsperr- und Luftverteilungsklappen Elektromotore angeordnet, die von der Steuereinrichtung in Abhängigkeit der von den Fahrzeuginsassen eingestellten Innenraumtemperatur sowie anderer gemessener Parameter, wie Außentemperatur eingestellt wird.

Daneben ist es aus der gattungsbildenden EP-B 0 210 548 bekannt, an den Luftausströmern zum Kopfbereich bei einer Heiz- und/oder Klimaanlage mit automatischer Luftverteilung von Hand einstellbare Einstellelemente für die Luftmenge und die Luftausströmrichtung vorzusehen.

Bei einer derartigen Anlage kann es vorkommen, daß die Regel-/Steuereinrichtung die Luftverteilung ausschließlich zu den Luftausströmern zum Kopfbereich einstellt. Sind diese nun aus irgendeinem Grund auch immer von den Fahrzeuginsassen über die Luftmengeneinstelleinrichtung gesperrt, so staut sich die auszuströmende Luft in der Heiz und/oder Klimaanlage. Damit kann die Gefahr bestehen, daß durch die sich in der Anlage stauende Luft andere Funktionselemente der Heiz- und/oder Klimaanlage, wie beispielsweise das Gebläse, die Luftverteilungsklappen, Dichtungen, Sensoren o.ä. beschädigt werden. Zudem strömt dann keine Luft mehr in den Fahrzeuginnenraum, wodurch sich die dort vorhandene Luft in ihrer Qualität verschlechtert.

Es ist Aufgabe der vorliegenden Erfindung, eine Heiz- und/oder Klimaanlage der eingangs genannten Art so weiterzubilden, daß die beschriebenen Nachteile nicht eintreten.

Diese Aufgabe wird erfindungsgemäß durch die Merkmale des ersten Anspruchs gelöst.

Die Erfindung basiert auf der Erkenntnis, daß gerade bei einer vollautomatischen Luftverteilung die Fahrzeuginsassen davon ausgehen, sich nicht um die Luftverteilung kümmern zu müssen und deshalb erwarten, daß diese optimal von der Steuereinrichtung vorgenommen wird. Deshalb wird auch die Stellung mindestens eines Einstellelementes für die Luftmenge an mindestens einem Luftausströmer zum Kopfbereich von der Regel-/Steuereinrichtung erfaßt. Nunmehr kann die Regel-/Steuereinrichtung hierauf bei geschlossenem Einstellelement reagieren und entweder die Luftverteilung ändern, die zum Ausströmen vorgesehene Luftmenge ändern oder aber - wie Anspruch 2 vorschlägt - eine Anzeige aktivieren, die dem Fahrer signalisiert, daß die als optimal erkannte Luftverteilung aufgrund mindestens eines geschlossenen Luftausströmers zum Kopfbereich nicht vorgenommen werden kann. Der Fahrer hat dann die Möglichkeit, mindestens einen Luftausströmer zu öffnen. Die zu aktivierende Anzeige kann ein akustisches und/oder optisches Signal sein.

Gemäß der Weiterbildung nach Anspruch 4 ändert die Regel-/Steuereinrichtung ihr Luftverteilungsprogramm bzw. aktiviert die Warneinrichtung nur dann, wenn die bereitgestellte Luft aufgrund ihrer Menge und der vorgegebenen Luftverteilung an den Luftausströmer zum Kopfbereich nicht oder nur stark behindert ausströmen kann.

Die Weiterbildung nach Anspruch 5 stellte eine Alternative und/oder Ergänzung zu der Ausgestaltung nach Anspruch 2 dar. Hier wird über den Stellantrieb, z.B. ein elektrisch pneumatisch betätigbarer Stellmotor oder Schrittmotor, selbsttätig von der Regel-/Steuereinrichtung der gesperrte Luftausströmer soweit geöffnet, daß die von der Heiz- und/oder Klimaanlage bereitgestellte Luftmenge ausströmen kann.

Die Ausgestaltung der Erfindung gemäß Anspruch 6 hat den Vorteil, daß bei einem zwangsweisen Öffnen des von den Fahrzeuginsassen verschlossenen Luftausströmers zum Kopfbereich durch die Regel-/Steuereinrichtung gleichzeitig die Ausblaserichtung an der zwangsgeöffneten Luftausströmerdüse so einstellt wird, daß Zugerscheinungen nicht zu befürchten sind.

Alternativ anstelle eines separaten Stellantriebes kann auch ein gemeinsamer Stellantrieb für die Luftmenge und die Luftausströmrichtung vorgesehen werden, wie Anspruch 7 vorschlägt. Hierbei ist es sinnvoll, die automatische Einstellung der Luftausströmrichtung nur dann vorzunehmen, wenn die Einstellelemente für die Luftmenge ebenfalls zwangsweise geöffnet werden.

An dieser Stelle sei darauf hingewiesen, daß die Stellantriebe so ausgelegt sind, daß selbstverständlich die vorgesehene Einstellung von Hand beibehalten wird.

Die Weiterbildung nach Anspruch 8 beschreibt bevorzugte Möglichkeiten für die Ausgestaltung der Warneinrichtung.

In Anspruch 9 sind bevorzugte Erkennungseinrichtungen beschrieben.

Durch die Erfindung wird allgemein der Vorteil erzielt, daß unter Beibehaltung der von Hand durchführbaren Einstellmöglichkeiten an den Luftausströmern zum Kopfbereich der Fahrer darauf hingewiesen wird, wenn mindestens ein Luftausströmer zum Kopfbereich gesperrt ist und damit eine von der Regel-/Steuereinrichtung als optimal erkannte Luftverteilung nicht möglich ist bzw. behindert wird oder aber die als optimal erkannte Luftverteilung zwangsweise durchgeführt werden kann, indem von Hand gesperrte Luftausströmer zum Kopfbereich mindestens soweit geöffnet werden, daß die vom Regel-/Steuerprogramm vorgesehene Luftverteilung verwirklicht werden kann.

## Patentansprüche

1. Heiz- und/oder Klimaanlage für Kraftfahrzeuge, insbesondere für einen Personenkraftwagen, mit im Fahrzeuginnenraum angeordneten Luftausströmern zum Scheiben-, Kopf- und Fußraumbereich und mit einer von einer Regeleinrichtung ansteuerbaren Luftverteileinrichtung zum Verteilen der Luft zu den einzelnen Luftausströmern, wobei die Regeleinrichtung entsprechend eines vorgegebenen Programms und vorgegebener Parameter die Luftverteilung vornimmt und mit an allen Luftausströmern zum Kopfbereich vorgesehenen Einstellelementen, wobei zumindest ein Einstellelement für mindestens einen Luftausströmer vorgesehen ist, mit dem von Hand eine Mengenregulierung der durch den zugeordneten Luftausströmer in das Fahrzeug einströmenden Luftmenge möglich ist,
**dadurch gekennzeichnet, daß** an diesem Einstellelement eine Stellungserkennungseinrichtung zum Erfassen der Betriebsstellung dieses Einstellelementes vorgesehen ist, die mit der Regel-/Steuereinrichtung verbunden ist.

2. Heiz- und/oder Klimaanlage nach Anspruch 1,
**dadurch gekennzeichnet, daß** die Regel-/Steuereinrichtung bei einer Luftverteilung zu einem geschlossenem Einstellelement eine, ein Warnsignal abgebende Anzeige aktiviert.

3. Heiz- und/oder Klimaanlage nach Anspruch 1 oder 2,
**dadurch gekennzeichnet, daß** die Regel-/Steuereinrichtung die Anzeige aktiviert, wenn mindestens ein Einstellelement unter einem vorgegebenem Schwellwert geschlossen ist.

4. Heiz- und/oder Klimaanlage nach Anspruch 3,
**dadurch gekennzeichnet, daß** die Größe des Schwellwertes von der Einstellung der Luftverteilung zwischen den einzelnen Luftausströmern abhängt.

5. Heiz- und/oder Klimaanlage nach einem der vorangegangenen Ansprüche,
**dadurch gekennzeichnet, daß** an dem Einstellelement ein mit der Regel-/Steuereinrichtung verbundener Stellantrieb vorgesehen ist.

6. Heiz- und/oder Klimaanlage nach einem der vorangegangenen Ansprüche, wobei an den Luftausströmern zum Kopfbereich weiterhin von Hand einstellbare Luftleitelemente vorgesehen sind,
**dadurch gekennzeichnet, daß** ein weiterer, mit der Regel-/Steuereinrichtung verbundener Stellantrieb zum Einstellen der Luftleitelemente vorgesehen ist.

7. Heiz- und/oder Klimaanlage nach mindestens einem der vorangegangenen Ansprüche,
**dadurch gekennzeichnet, daß** ein gemeinsamer Stellantrieb für die Einstellelemente und die Luftleitelemente mindestens eines Luftausströmers zum Kopfbereich vorgesehen ist derart, daß beim Öffnen der Einstellelemente die Luftleitelemente in eine optimale Stellung verfahren werden.

8. Heiz- und/oder Klimaanlage nach mindestens einem der vorangegangenen Ansprüche,
**dadurch gekennzeichnet, daß** die Anzeige für das Warnsignal ein Tongenerator und/oder eine vorzugsweise am Armaturenbrett des Kraftfahrzeuges vorgesehene optische Anzeigeeinheit ist.

9. Heiz- und/oder Klimaanlage nach einem der vorangegangenen Ansprüche,
**dadurch gekennzeichnet, daß** die Erkennungseinrichtung zum Erfassen der Betriebsstellen der Einstellelemente und/oder zum Erfassen der Position der Luftleitelemente ein Mikroschalter, ein Hall-Sensor, Potentiometer, eine Lichtschranke oder eine Video-Abtasteinrichtung ist.

## Claims

1. A heating and/or air-conditioning system for motor vehicles, especially for a passenger car, comprising means for discharging air in the interior of the vehicle towards the windscreen, the head region and the foot space region and an air distribution device actuated by a control device for distributing the air among the individual air discharge means, wherein the control device distributes the air in accordance with a set program and set parameters, the system also comprising adjusting elements provided on all means for discharging air to the head region, wherein at least one adjusting element for at least one air discharge device is provided for manually regulating the amount of air flowing through the associated discharge means into the vehicle,
**characterised in that** a position recognising device connected to the open-loop or closed-loop control device is provided for detecting when the said adjusting element is in the operating position.

2. A heating and/or air-conditioning system according to claim 1, **characterised in that** when air is distributed to a closed adjusting element, the control device activates an indicator which delivers a warning signal.

3. A heating and/or air-conditioning system according to claim 1 or claim 2, **characterised in that** the control device activates the indicator when at least one adjusting element is closed below a preset threshold value.

4. A heating and/or air-conditioning according to claim 3, **characterised in that** the threshold value depends on the setting of the air distribution between the individual air discharge means.

5. A heating and/or air-conditioning system according to any of the preceding claims, **characterised in that** an actuating drive connected to the control device is provided on the adjusting element.

6. A heating and/or air-conditioning system according to any of the preceding claims, wherein manually adjustable air circulating elements are provided on the means for distributing air to the head region, **characterised in that** an additional adjusting drive connected to the control device is provided for setting the air circulating elements.

7. A heating and/or air-conditioning system according to at least one of the preceding claims, **characterised in that** a common adjusting drive is provided for the adjusting elements and the air circulating elements of at least one means for discharging air to the head region, such that when the adjusting elements are opened, the air circulating elements are moved into an optimum position.

8. A heating and/or air-conditioning system according to at least one of the preceding claims, **characterised in that** the indicator for the warning signal is a sound generator and/or an optical indicator unit preferably provided on the vehicle dashboard.

9. A heating and/or air-conditioning system according to any of the preceding claims, **characterised in that** the recognition device for detecting when the adjusting elements are in the operating position and/or for detecting the position of the air circulating elements is a microswitch, a Hall sensor, a potentiometer, a light barrier or a video scanner.

## Revendications

1. Installation de chauffage et/ou de climatisation pour véhicules automobiles, en particulier pour un véhicule léger, comprenant des ouïes de sortie d'air disposées dans l'espace intérieur du véhicule et dirigées vers les régions du pare-brise, de la tête et des pieds, et comprenant un dispositif de distribution de l'air pouvant être commandé par un dispositif de régulation et destiné à distribuer l'air vers les différentes ouïes de sortie d'air, le dispositif de régulation assurant la distribution de l'air conformément à un programme prédéterminé et à des paramètres prédéterminés, et comprenant des éléments de réglage prévus sur toutes les ouïes de sortie d'air dirigées vers la région de tête, dans laquelle il est prévu au moins un élément de réglage pour au moins une ouïe de sortie d'air, au moyen duquel il est possible d'effectuer manuellement une régulation du débit de l'air entrant dans le véhicule à travers les ouïes de sortie d'air qui y sont associées,
**caractérisée en ce qu'**
il est prévu au niveau de cet élément de réglage un dispositif de détection de la position destiné à capter la position de fonctionnement de cet élément de réglage, et relié au dispositif de régulation/commande.

2. Installation de chauffage et/ou de climatisation selon la revendication 1,
**caractérisée en ce que**
dans le cas d'une distribution d'air aboutissant à un élément de réglage fermé, le dispositif de régulation/commande active une signalisation qui émet un signal d'avertissement.

3. Installation de chauffage et/ou de climatisation selon la revendication 1 ou 2,
**caractérisée en ce que**
le dispositif de régulation/commande active la signalisation lorsqu'au moins un élément de réglage est fermé au-dessous d'une valeur de seuil prédéterminée.

4. Installation de chauffage et/ou de climatisation selon la revendication 3,
**caractérisée en ce que**
le niveau de la valeur de seuil dépend du réglage de la distribution d'air entre les différentes ouïes de sortie d'air.

5. Installation de chauffage et/ou de climatisation selon une des revendications précédentes,
**caractérisée en ce qu'**
un actionneur relié au dispositif de régulation/commande est prévu sur l'élément de réglage.

6. Installation de chauffage et/ou de climatisation selon une des revendications précédentes, dans laquelle il est prévu en supplément, au niveau des ouïes de sortie d'air dirigées vers la région de tête, des éléments déflecteurs d'air pouvant être réglés à la main,
**caractérisée en ce qu'**
il est prévu un autre actionneur relié au dispositif de régulation/commande et destiné au réglage des éléments déflecteurs d'air.

7. Installation de chauffage et/ou de climatisation selon au moins une des revendications précédentes,
**caractérisée en ce qu'**
un actionneur commun pour les éléments de réglage et pour les éléments déflecteurs d'air d'au moins une ouïe de sortie d'air dirigée vers la région de tête est prévu de telle manière que, lors de l'ouverture des éléments de réglage, les éléments déflecteurs d'air soient placés dans une position optimale.

8. Installation de chauffage et/ou de climatisation selon au moins une des revendications précédentes,
**caractérisée en ce que**
la signalisation pour le signal d'avertissement est un générateur de tonalité et/ou une unité de signalisation optique prévue de préférence sur le tableau de bord du véhicule automobile.

9. Installation de chauffage et/ou de climatisation selon une des revendications précédentes,
**caractérisée en ce que**
le dispositif de détection destiné à capter les positions de fonctionnement des éléments de réglage et/ou à capter la position des éléments déflecteurs d'air est un micro-interrupteur, un capteur à effet Hall, un potentiomètre, un barrage photo-électrique ou un dispositif d'exploration vidéo.
